(19) **Europäisches Patentamt**
**European Patent Office**
**Office européen des brevets**

(11) **EP 3 869 054 B1**

(12) **EUROPEAN PATENT SPECIFICATION**

(45) Date of publication and mention
of the grant of the patent:
**24.08.2022  Bulletin 2022/34**

(21) Application number: **19872288.6**

(22) Date of filing: **26.09.2019**

(51) International Patent Classification (IPC):
**F16C 19/16** (2006.01)     **F16C 33/38** (2006.01)
**F16C 33/66** (2006.01)

(52) Cooperative Patent Classification (CPC):
**F16C 33/3806; F16C 19/163; F16C 33/3887;**
F16C 2240/46; F16C 2240/80; F16C 2322/39

(86) International application number:
**PCT/JP2019/038049**

(87) International publication number:
**WO 2020/080061 (23.04.2020 Gazette 2020/17)**

(54) **ANGULAR BALL BEARING**

SCHRÄGKUGELLAGER

ROULEMENT À BILLES ANGULAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.10.2018   JP 2018194424**

(43) Date of publication of application:
**25.08.2021   Bulletin 2021/34**

(73) Proprietor: **NSK Ltd.**
**Tokyo 141-8560 (JP)**

(72) Inventors:
• **IWASAKI Kazumi**
**Fujisawa-shi, Kanagawa 251-8501 (JP)**

• **KATSUNO Yoshiaki**
**Fujisawa-shi, Kanagawa 251-8501 (JP)**

(74) Representative: **Grünecker Patent- und
Rechtsanwälte
PartG mbB
Leopoldstraße 4
80802 München (DE)**

(56) References cited:
**EP-A1- 3 255 293      DE-A1-102015 215 460
JP-B2- 6 191 716      JP-U- H02 122 215
JP-U- S58 195 118      US-A- 3 647 269
US-A- 3 685 877**

**Description**

**Technical Field**

The present invention relates to an angular contact ball bearing, and more specifically, to an angular contact ball bearing including an outer ring guide cage and applicable to a spindle device or a motor of a machine tool.

**Background Art**

An angular contact ball bearing is widely used for a spindle of a machine tool. Known cages used for the angular contact ball bearing include an outer ring guide cage, an inner ring guide cage, and a ball guide cage. Among them, the outer ring guide cage having good lubricity by a lubricant flowing to a radially outer side by a centrifugal force is often used for an angular contact ball bearing used for high-speed rotation (for example, see Patent Document 1). EP 3 255 293 A1 discloses an angular contact ball bearing according to the preamble of claim 1.

**Prior Art Document**

**Patent Document**

Patent Document 1: JP-A-2017-57956

**Summary of Invention**

**Technical Problem**

In an angular contact ball bearing including an outer ring guide cage, balls come into contact with inner surfaces of cage pockets with a slight delay or advance on a ball basis due to a shape error of an inner ring raceway surface and an outer ring raceway surface between which the balls roll, a shape error of the balls, or misalignment or inclination of central axes of an inner ring and an outer ring of the bearing.

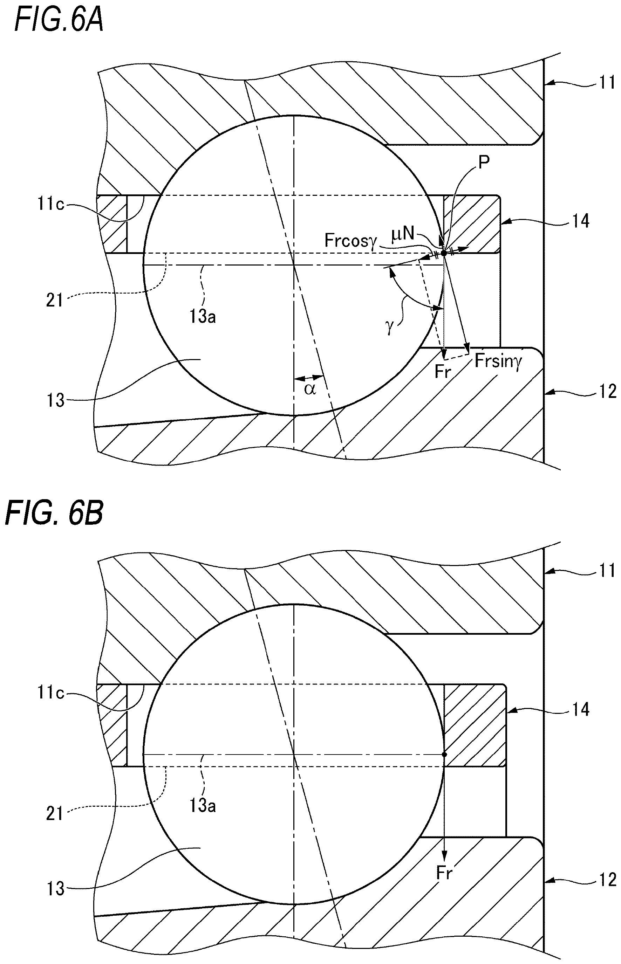

Fig. 6B is a schematic view of a so-called machined cage of an outer ring guide type when a pocket inner surface comes into contact with a ball. In this case, when an equator portion 13a of a ball 13 comes into contact with a pocket inner surface of a cage 14, a frictional force Fr is generated in the cage 14.

For this reason, the cage may self-vibrate in a radial direction, which is a direction of the frictional force Fr, and noise called cage noise may be generated.

The present invention has been made in view of the above-described problem and an object thereof is to provide an angular contact ball bearing including an outer ring guide cage that can reduce cage noise caused by self-vibration of the cage due to contact between a pocket inner surface of the cage and a ball.

**Solution to Problem**

The above object of the present invention is achieved by the following configurations.

(1) An angular contact ball bearing includes: an outer ring having an outer ring raceway surface on an inner circumferential surface; an inner ring having an inner ring raceway surface on an outer circumferential surface; a plurality of balls rollably arranged between the outer ring raceway surface and the inner ring raceway surface at a predetermined contact angle; and an outer ring guide cage having pockets that rollably hold the plurality of balls.

The cage includes a pair of annular portions and a plurality of pillar portions arranged at a predetermined interval in a circumferential direction, the plurality of pillar portions coupling the pair of annular portions in an axial direction.

A cage inner diameter is the same over an entire circumference of the pocket at a radially inner opening of the pocket.

When 1/2 of the cage inner diameter at the radially inner opening is B, a diameter clearance of a radial guide clearance of the cage is $\Delta L$, a pitch circle diameter of the ball is PCD, a diameter of the radially inner opening of the pocket is Dp, A = Bcos$\theta$, and $\theta$=sin$^{-1}${(Dp/2)B},

$$B + \Delta L/2 > PCD/2 \text{ and } PCD/2 > A + \Delta L/2$$

are satisfied.

**Advantageous Effects of Invention**

According to the angular contact ball bearing of the present invention, it is possible to rotationally drive the outer ring guide cage stably and reduce cage noise generated from the cage.

**Brief Description of Drawings**

Fig. 1 illustrates an angular contact ball bearing according to a first embodiment of the present invention and is a cross-sectional view of a main portion taken along a line X-VI in Fig. 2.
Fig. 2 is a cross-sectional view of an axially intermediate portion of the angular contact ball bearing in Fig. 1.
Fig. 3 is a cross-sectional view taken along a line III-III in Fig. 2.
Fig. 4 is a perspective view of a cage.
Fig. 5 is a cross-sectional view illustrating dimensional relationships between the cage and a ball.
Fig. 6A is the cross-sectional view taken along the line X-VI in Fig. 2 and illustrates a force acting on a contact portion between the ball and the cage by radial vibration in the cage according to the present embodiment, and Fig. 6B is the cross-sectional view taken along the line X-VI in Fig. 2 and illustrates a force acting on a contact portion between a ball and a cage in the related art by radial vibration in the cage.
Fig. 7A is a cross-sectional view of an angular contact ball bearing according to a second embodiment of the present invention, and Fig. 7B is a cross-sectional view of an angular contact ball bearing according to a modification of the second embodiment.
Fig. 8A is a cross-sectional view of an angular contact ball bearing according to a third embodiment of the present invention, and Fig. 8B is a cross-sectional view of an angular contact ball bearing according to a modification of the third embodiment.
Fig. 9 is a cross-sectional view of an angular contact ball bearing according to a fourth embodiment of the present invention.
Fig. 10A is a cross-sectional view of an angular contact ball bearing according to a first modification of the fourth embodiment of the present invention, and Fig. 10B is a cross-sectional view of an angular contact ball bearing according to a second modification of the fourth embodiment of the present invention.
Fig. 11 is a cross-sectional view of an angular contact ball bearing according to a fifth embodiment of the present invention.

**Description of Embodiment**

Hereinafter, angular contact ball bearings according to the embodiments of the present invention will be described in detail with reference to the drawings.

(First Embodiment)

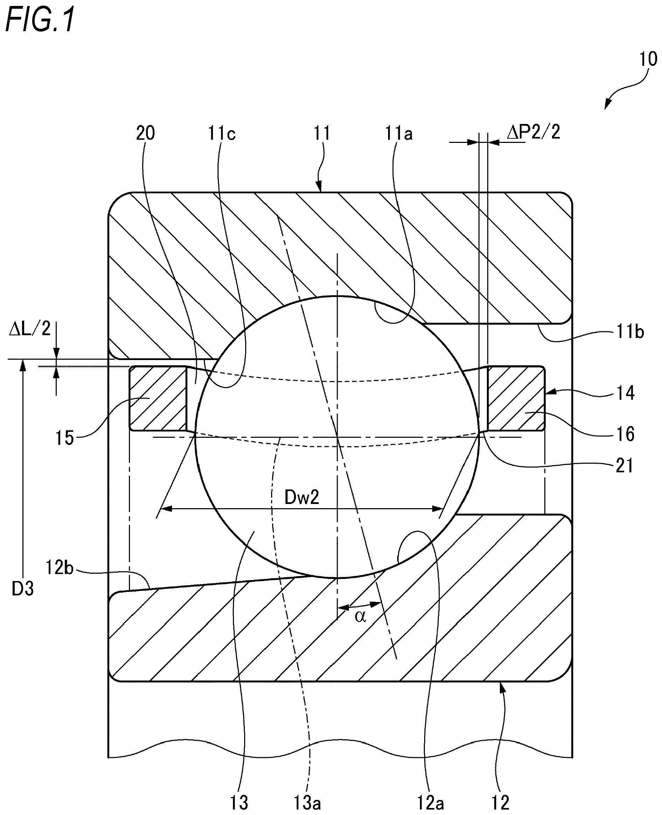

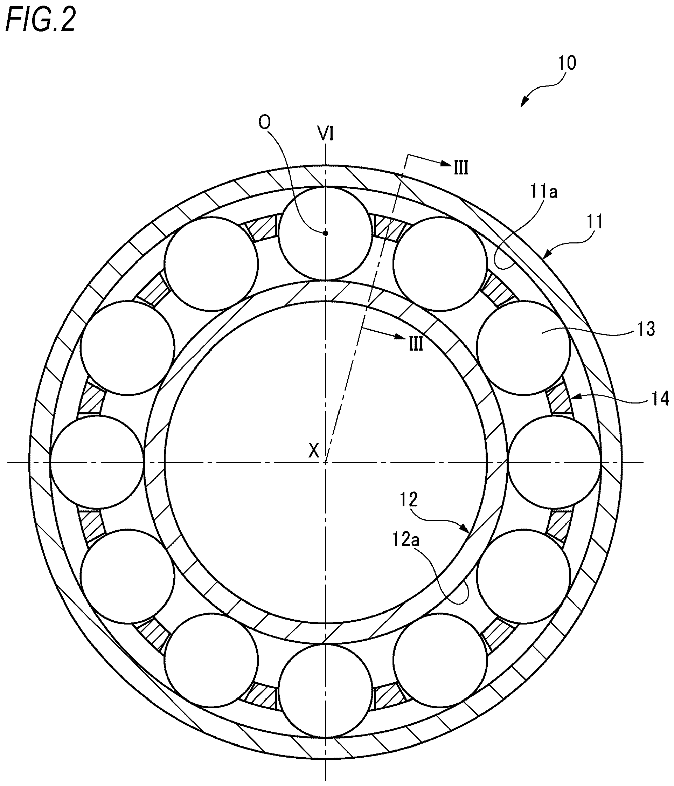

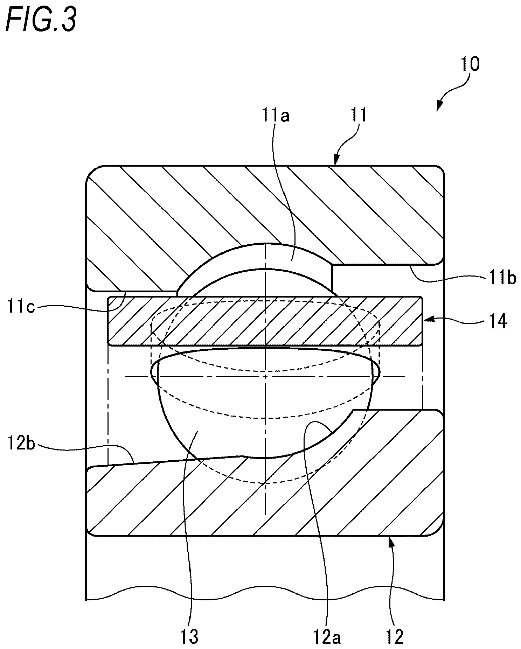

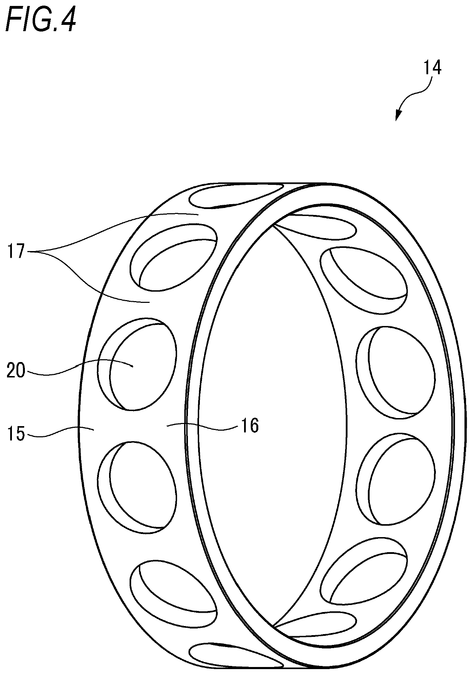

As illustrated in Figs. 1 to 4, an angular contact ball bearing 10 according to the first embodiment includes an outer ring 11 having an outer ring raceway surface 11a on an inner circumferential surface, an inner ring 12 having an inner ring raceway surface 12a on an outer circumferential surface, a plurality of balls 13 rollably arranged between the outer ring raceway surface 11a and the inner ring raceway surface 12a at a predetermined contact angle $\alpha$, and a cage 14 that rollably holds the plurality of balls 13.
The outer ring 11 is formed with a counter bore 11b on one side (bearing front surface side) of the outer ring raceway surface 11a in an axial direction. The inner ring 12 is formed with a counter bore 12b on the other side (axially back surface side) of the inner ring raceway surface 12a in the axial direction.
As also illustrated in Fig. 4, the cage 14 includes a pair of annular portions 15, 16 and a plurality of pillar portions 17 coupling the pair of annular portions 15, 16 in the axial direction. The plurality of pillar portions 17 are arranged at a predetermined interval in a circumferential direction. The cage 14 is an outer ring guide cage in which the annular portion 15 is guided by an inner circumferential surface 11c of a shoulder portion of the outer ring 11 on the other side in the axial direction. The pair of annular portions 15, 16 and two adjacent pillar portions 17 define a pocket 20 that holds the ball 13. The pocket 20 has a cylindrical shape with its central axis extending in a radial direction.
In the present embodiment, the cage 14, which includes the pair of annular portions 15, 16 and the plurality of pillar portions 17, has an inner circumferential surface having the same inner diameter over the entire cage 14 and an outer circumferential surface having the same outer diameter over the entire cage 14. For this reason, a cage inner diameter is the same over an entire circumference of the pocket 20 at a radially inner opening 21 of the pocket 20.

The cage 14 may be made of a synthetic resin, metal, or the like. A method for processing the cage 14 may be either cutting or injection molding. For example, the cage 14 made of a synthetic resin may be a phenol resin containing a base material. In this case, as the base material, paper, cotton cloth, asbestos cloth, glass fiber cloth, and nylon fabric may be used for a laminated plate, and wood powder, cotton, pulp, asbestos, mica, glass fiber, or the like may be used for a molded product. The cage 14 may also be a resin such as polyamide, polyacetal, polyether ether ketone, polyimide, and polyphenylene sulfide, and a reinforcing material such as glass fiber, carbon fiber, and aramid fiber may be added to the resin if necessary. The cage 14 may also be made of iron plated with a copper alloy, silver, or the like.

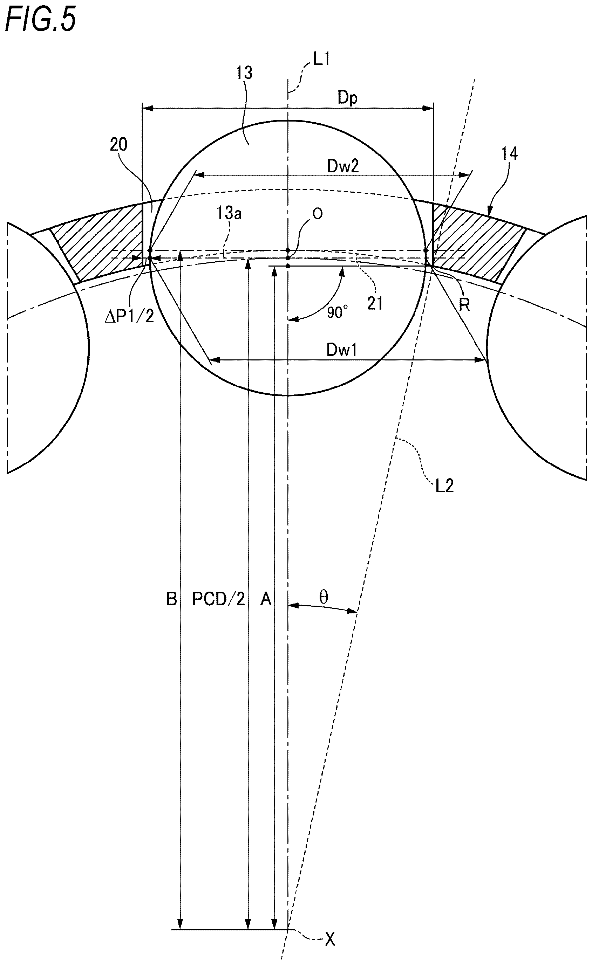

In the present embodiment, as illustrated in Fig. 5, when 1/2 of the cage inner diameter at the radially inner opening 21 is B, a diameter clearance of a radial guide clearance of the cage 14 is $\Delta L$ (see Fig. 1), a pitch circle diameter of the ball 13 is PCD, and a diameter of the radially inner opening 21 of the pocket 20 (hereinafter, also referred to as "pocket diameter") is Dp, $A = B\cos\theta$, and $\theta = \sin^{-1}\{(Dp/2)/B\}$, the following expressions are satisfied.

$$B + \Delta L/2 > PCD/2 \text{ and } PCD/2 > A + \Delta L/2$$

Further, $\theta$ is an angle between a shortest line L1, which connects a center X of a rotation axis of the angular contact ball bearing 10 and a center O of the ball 13, and a straight line L2, which connects the center X of the rotation axis of the angular contact ball bearing 10 and a farthest portion R of the radially inner opening 21 of the pocket 20 in the circumferential direction.

As a result, when the ball 13 rotationally drives the cage 14 via an inner surface of the pocket 20 during operation of the angular contact ball bearing 10, as illustrated in Fig. 5, a contact position between the ball 13 and the cage 14 in the circumferential (rotation) direction is an equator portion 13a of the ball 13 and the inner surface of the pocket 20 of the cage 14. In particular, when a condition of PCD/2 > A + $\Delta L/2$ is satisfied, even when the cage 14 moves to a radially outer side by 1/2 of the diameter clearance $\Delta L$, the contact position remains to be the equator portion 13a of the ball 13 and the inner surface of the pocket 20 and the cage 14 is stably rotationally driven. The equator portion 13a of the ball 13 is a line where a plane perpendicular to the shortest line L1, which connects the center X of the rotation axis of the angular contact ball bearing 10 and the center O of the ball 13, passes through a surface of the ball 13 in a position representing a ball diameter.

On the other hand, when the cage 14 moves in the axial direction during rotation, as illustrated in Fig. 6A, the position where the cage 14 comes into contact with the ball 13 is not the equator portion 13a of the ball 13, but a contact point P between the surface on the radially outer side of the equator portion 13a and the radially inner opening 21 of the pocket 20 of the cage 14. Figs. 6A and 6B illustrate a state in which the cage 14 moves to the radially outer side and comes into contact with the inner circumferential surface 11c of the shoulder portion of the outer ring 11.

Here, in an angular contact ball bearing in the related art as illustrated in Fig. 6B, lubrication between the cage 14 and the inner circumferential surface 11c of the shoulder portion of the outer ring 11 is not sufficient. When sliding friction between the cage 14 and the inner circumferential surface 11c is large, the cage 14 self-vibrates greatly in the radial direction and generates so-called cage noise due to excessive vibration energy of the cage 14.

On the other hand, in the angular contact ball bearing 10 according to the present embodiment as illustrated in Fig. 6A, when the cage 14 self-vibrates greatly in the radial direction, that is, the so-called cage noise is generated, the cage 14 can be restricted from moving in the radial direction since the radially inner opening 21 of the pocket 20 comes into contact with the ball 13.

That is, when the self-vibration occurs and the cage 14 moves in the radial direction, a radial force Fr (force generated by the vibration) acts on the contact portion P between the cage 14 and the ball 13. Fr is divided into component forces of a tangential force Fr × sinγ and a normal force Fr × cosγ by the curved surface of the ball 13. When the magnitude of Fr × cosγ is equal to a normal reaction force N and a friction coefficient between the ball 13 and the pocket 20 is $\mu$, a friction force of $\mu$N (= $\mu$Fr × cosγ) is generated at the contact point P.

Due to the frictional force, such effects can be obtained that the vibration of the cage 14 in the radial direction is attenuated, the self-vibration is reduced, and the cage noise is reduced. On the other hand, even in a state in which the cage 14 is in contact with the inner circumferential surface 11c of the shoulder portion of the outer ring 11, no frictional force is generated from the force Fr in the radial direction in the angular contact ball bearing in the related art in which an inner diameter of the pocket 20 at axially end portions is smaller than PCD of the ball 13, as shown in Fig. 6B.

B, which is 1/2 of the cage inner diameter at the radially inner opening 21, satisfies B + $\Delta L/2$ > PCD/2, more preferably satisfies B > PCD/2, and still more preferably satisfies B - $\Delta L/2$ > PCD/2.

That is, in a case of PCD/2 $\geq$ B > PCD/2 - $\Delta L/2$, the cage 14 moves in the axial direction only when the cage 14 is in a circumferential phase where the cage 14 moves to the radially outer side and the radially inner opening 21 of the pocket 20 is on the radially outer side relative to PCD, and thereby the radially inner opening 21 of the pocket 20 can come into contact with the ball 13 and the radial movement of the cage 14 is restricted.

In a case of PCD/2 + $\Delta L/2$ $\geq$ B > PCD/2, the cage 14 moves in the axial direction when the cage 14 is in the circumferential phase where the radially inner opening 21 is on the radially outer side relative to PCD, and thereby the radially inner opening 21 of the pocket 20 can come into contact with the ball 13 and the radial movement of the cage 14 is restricted.

In a case of B > PCD/2 + ΔL/2, the cage 14 moves in the axial direction in all circumferential phases of the cage 14, and thereby the radially inner opening 21 of the pocket 20 can come into contact with the ball 13 and the radial movement of the cage 14 is restricted. That is, even when the cage 14 moves in the radial direction by 1/2 of the diameter clearance ΔL, in all the circumferential phases of the cage 14, the contact position between the ball 13 and the cage 14 in the axial direction can be the surface of the ball 13 on the radially outer side of the equator portion 13a and the radially inner opening 21 of the pocket 20.

When an allowable diameter error of the cage inner diameter 2B is Δd, the present invention is further desirably designed to satisfy the following expressions.

$$B + \Delta L/2 + \Delta d/2 > PCD/2 \text{ and } PCD/2 > A + \Delta L/2 + \Delta d/2$$

That is, even when the allowable diameter error Δd of the cage inner diameter 2B is taken into consideration, the contact position of the ball 13 and the cage 14 in the circumferential (rotation) direction is the equator portion 13a of the ball 13 and the inner surface of the pocket 20 of the cage 14, and the contact position of the ball 13 and the cage 14 in the axial direction is the radially outer side of the equator portion 13a of the ball 13 and the radially inner opening 21 of the pocket 20 of the cage 14. As a result, it is possible to rotationally drive the cage 14 stably and reduce the so-called cage noise due to great self-vibration of the cage 14 in the radial direction.

Further, B > PCD/2 may be satisfied even when the allowable diameter error Δd of the cage inner diameter 2B is taken into consideration as described above. Further, in all the circumferential phases of the cage 14, B, which is 1/2 of the cage inner diameter at the radially inner opening 21, is more preferably set to satisfy B - ΔL/2 - Δd/2 > PCD/2 so that the radially inner opening 21 of the pocket 20 reduces the cage noise.

Further, when the condition of B > PCD/2 is satisfied in addition to PCD/2 > A + ΔL/2, or when B - ΔL/2 > PCD/2 or B - ΔL/2 - Δd/2 > PCD/2 is satisfied, as illustrated in Figs. 1 and 5, a pocket clearance ΔP between the cage 14 and the ball 13 is different between a pocket clearance ΔP1 in the rotation direction (circumferential direction of the bearing) and a pocket clearance ΔP2 in a rotation axis direction (axial direction of the bearing).

Specifically, the pocket clearance ΔP1 in the rotation direction (circumferential direction of the bearing) is ΔP1 = Dp - Dw1 from the pocket diameter Dp and a diameter Dw1 of the equator portion 13a of the ball 13. On the other hand, the pocket clearance ΔP2 in the rotation axis direction (axial direction of the bearing) is ΔP2 = Dp - Dw2 from a diameter Dw2 of the ball 13 in a position where the ball 13 faces the radially inner opening 21 of the pocket 20 in the axial direction.

Here, ΔP2 > ΔP1 since Dw2 is a smaller diameter than Dw1.

When an inner diameter of the inner circumferential surface 11c of the shoulder portion of the outer ring 11 on which the cage 14 is guided is D3, the diameter clearance ΔL of the radial guide clearance of the cage 14 is designed to satisfy 0 < ΔL ≤ 0.030D3. The diameter clearance ΔL of the radial guide clearance preferably satisfies 0 < ΔL ≤ 0.020D3, and more preferably satisfies 0.0002D3 ≤ ΔL ≤ 0.020D3.

That is, the diameter clearance of the radial guide clearance of the cage 14 is restricted to ΔL ≤ 0.030D3 (preferably ΔL ≤ 0.020D3) to limit an amount of radial movement of the cage 14, thereby reducing abnormal vibration of the cage 14 in the radial direction. Further, the diameter clearance of the radial guide clearance of the cage 14 is restricted to 0 < ΔL (preferably 0.0002D3 ≤ ΔL) to prevent the cage 14 from sticking to the inner circumferential surface (guide surface) of the outer ring 11, and thereby the cage 14 is more stably guided on the inner circumferential surface of the outer ring 11.

Accordingly, the cage 14 according to the present embodiment further has an effect that, even if the cage 14 shakes in the axial direction during rotation, an axially wall surface of the pocket 20 hardly comes into contact with the ball 13, making it less likely to induce the cage noise. Even when the axially wall surface of the pocket 20 comes into contact with the ball 13, the cage noise can be reduced by the frictional force generated between the ball 13 and the cage 14 as described above.

The radially inner opening 21 of the pocket 20 that comes into contact with the ball 13 is preferably C-chamfered or R-chamfered to prevent wear due to the contact with the ball 13. The C chamfering may be C0.1 or more (that is, points that are 0.1 mm or more apart from an intersection of the inner circumferential surface of the cage 14 with an axially end surface of the pocket 20 are connected to intersect the surfaces at 45°) and more preferably C0.1 to C1. The R chamfering may be R0.1 (that is, a quadrant obtained by connecting points that are 0.1 mm or more apart from the intersection of the inner circumferential surface of the cage 14 and the axially end surface of the pocket 20) or more and more preferably R0.1 to Rl.

As described above, according to the angular contact ball bearing 10 in the present embodiment, it is possible to rotationally drive the cage 14 stably and reduce the cage noise by satisfying the two expressions B + ΔL/2 > PCD/2 and PCD/2 > A + ΔL/2.

Further, in the present embodiment, the cage 14 can be easily formed since the cage inner diameter is the same over the entire circumference of the pocket 20 at the radially inner opening 21 of the pocket 20.

(Second Embodiment)

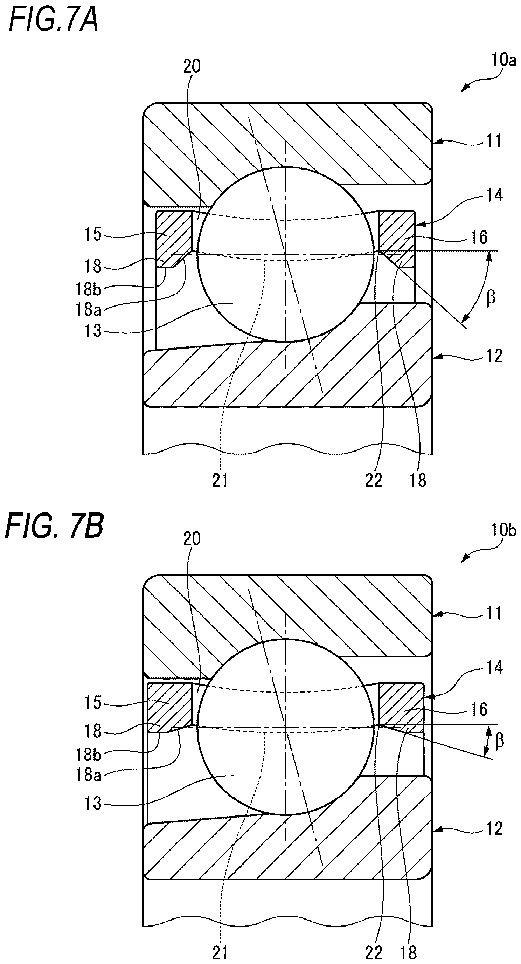

Next, an angular contact ball bearing according to the second embodiment will be described with reference to Figs. 7A and 7B. In the following second to fifth embodiments, the dimensional relationships between the cage and the ball illustrated in Fig. 5 and the effects thereof are the same as those of the first embodiment, and thus the description thereof will be omitted or simplified.

In an angular contact ball bearing 10a according to the second embodiment illustrated in Fig. 7A, a thick portion 18 is formed on an inner circumferential surface of each of the pair of annular portions 15, 16 of the cage 14. The thick portion 18 protrudes from an axially outer end edge 22 of the radially inner opening 21 of the pocket 20 toward the radially inner side. An axially inner surface of the thick portion 18 has an inclined surface 18a extending axially outward at an angle β toward the radially inner side, and a cylindrical surface 18b provided on an axially outer side of the inclined surface 18a.

A shape of the pillar portion 17 is the same as that of the first embodiment, and the cage inner diameter is the same over the entire circumference of the pocket 20 at the radially inner opening 21 of the pocket 20. This configuration is also the same in the following embodiments.

Accordingly, a radial thickness of the pair of annular portions 15, 16 is large due to the thick portion 18 and the strength of the cage 14 is improved. Further, lubricating oil adhering to the inclined surface 18a is supplied to between the ball 13 and the pocket 20 by a centrifugal force and the lubricity is improved. Further, by providing the thick portion 18 having the inclined surface 18a, the edge contact between the axially outer end edge 22 of the pocket 20 and the ball 13 is reduced and the durability of the cage 14 is improved.

Other configurations and operations are the same as those of the first embodiment.

As in an angular contact ball bearing 10b according to a modification illustrated in Fig. 7B, the radial thickness of the thick portion 18 may be smaller than that in Fig. 7A by making the angle β of the inclined surface 18a smaller. The angle β of the inclined surface 18a is 30° or more, more preferably 45° or more.

(Third Embodiment)

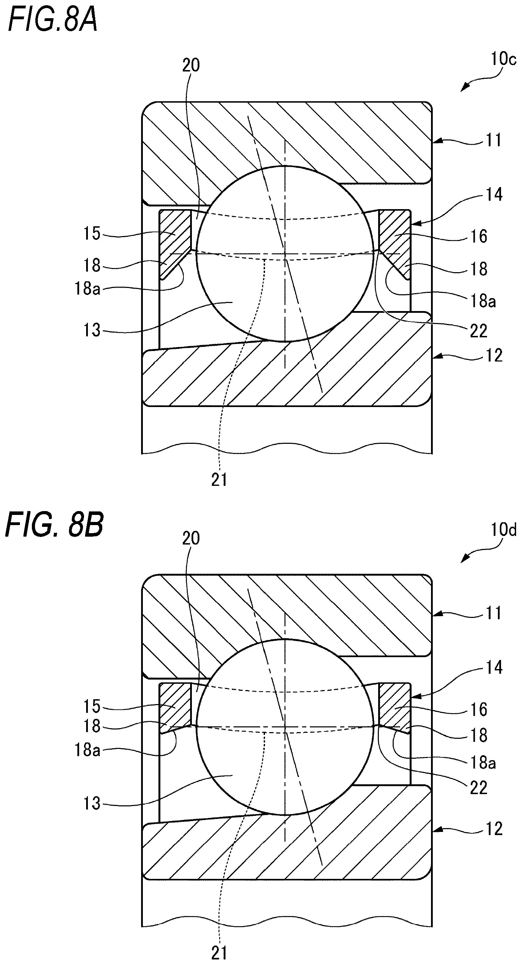

Next, an angular contact ball bearing according to the third embodiment will be described with reference to Figs. 8A and 8B.

In an angular contact ball bearing 10c according to the third embodiment illustrated in Fig. 8A, as in the second embodiment, the thick portion 18 is formed on an inner circumferential surface of each of the pair of annular portions 15, 16 of the cage 14. The thick portion 18 protrudes from the axially outer end edge 22 of the radially inner opening 21 of the pocket 20 toward the radially inner side. The cage inner diameter is the same over the entire circumference of the pocket 20 at the radially inner opening 21 of the pocket 20. However, the thick portion 18 according to the present embodiment does not have the cylindrical surface 18b, and the inclined surface 18a is formed up to an axially outer surface of the cage 14.

Accordingly, the radial thickness of the pair of annular portions 15, 16 is larger due to the thick portion 18 and the strength of the cage 14 is improved. Further, lubricating oil adhering to the longer inclined surface 18a is supplied to between the ball 13 and the pocket 20 by the centrifugal force and the lubricity is improved.

Other configurations and operations are the same as those of the first embodiment.

Also in the present embodiment, as in an angular contact ball bearing 10d of a modification illustrated in Fig. 8B, the radial thickness of the thick portion 18 may be smaller than that of Fig. 8A by making the angle β of the inclined surface 18a smaller.

(Fourth Embodiment)

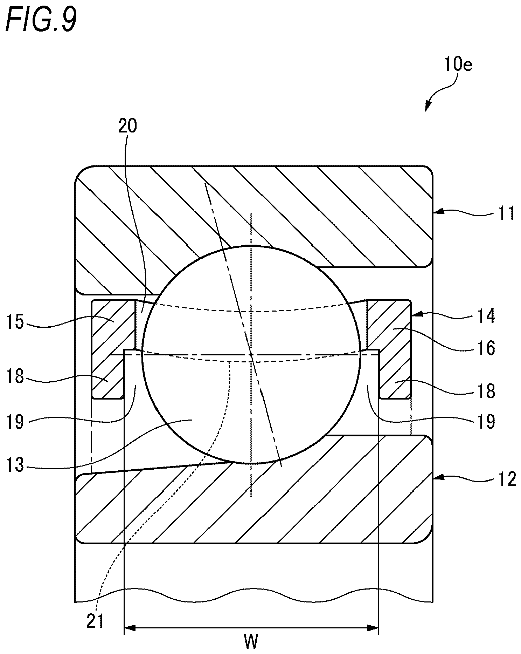

Fig. 9 is a cross-sectional view of an angular contact ball bearing according to the fourth embodiment of the present invention. In an angular contact ball bearing 10e according to the fourth embodiment, the thick portion 18 is formed between an axially outer surface of the cage 14 and an axially outer position of the axially outer end edge 22 of the radially inner opening 21 of the pocket 20. The thick portion 18 protrudes from an inner circumferential surface of each of the pair of annular portions 15, 16 of the cage 14. The cage inner diameter is the same over the entire circumference of the pocket 20 at the radially inner opening 21 of the pocket 20.

Accordingly, the radial thickness of the pair of annular portions 15, 16 is large due to the thick portion 18 and the strength of the cage 14 is improved. Further, a lubricating oil reservoir 19 is formed between the inner circumferential surface of each of the annular portions 15, 16 on the axially outer side of the axially outer end edge 22 of the radially inner opening 21 of the pocket 20 and an axially inner surface of the thick portion 18. Accordingly, lubricating oil can be supplied from the lubricating oil reservoir 19 to between the ball 13 and the pocket 20.

Other configurations and operations are the same as those of the first embodiment.

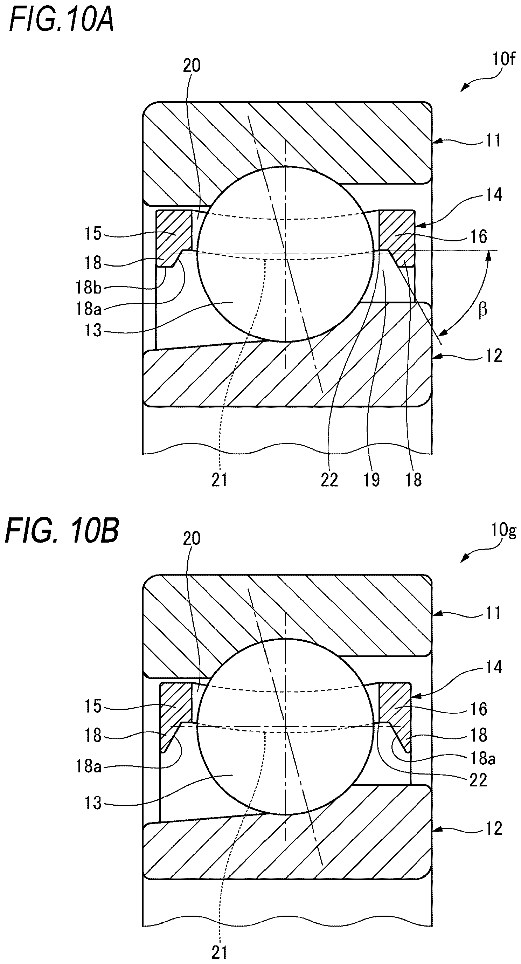

In the angular contact ball bearing 10e, the axially inner surface of the thick portion 18 is a surface perpendicular to a central axis of the angular contact ball bearing 10e. However, as in an angular contact ball bearing 10f of a first modification illustrated in Fig. 10A, the thick portion 18 may have a shape including the inclined surface 18a and the cylindrical surface 18b. Alternatively, as in an angular contact ball bearing 10g of a second modification illustrated in Fig. 10B, the thick portion 18 may have a shape in which the inclined surface 18a is continuous to the axially outer surface of the cage 14.

(Fifth Embodiment)

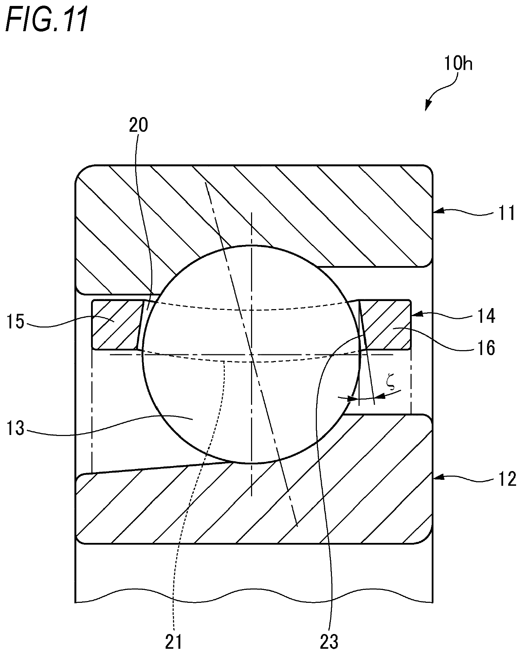

Fig. 11 is a cross-sectional view of an angular contact ball bearing according to the fifth embodiment of the present invention. In an angular contact ball bearing 10h according to the fifth embodiment, a tapered surface 23 is formed on the inner surface of the pocket 20. The tapered surface 23 gradually increases in diameter toward the radially inner side. A taper angle $\zeta$ of the tapered surface 23 is appropriately set in a range of 1° to 45°. The taper angle $\zeta$ is more preferably 3° to 30° from a viewpoint of appropriately ensuring the contact position between the ball 13 and the pocket 20.

As a result, the ball 13 is prevented from coming into edge contact with the radially inner opening 21 of the pocket 20 and the durability of the cage 14 is improved.

Other configurations and operations are the same as those of the first embodiment.

The present invention is not limited to the embodiments and examples described above, and modifications, improvements, and the like can be made as appropriate.

As described above, the present specification discloses the following matters.

(1) An angular contact ball bearing including: an outer ring having an outer ring raceway surface on an inner circumferential surface; an inner ring having an inner ring raceway surface on an outer circumferential surface; a plurality of balls rollably arranged between the outer ring raceway surface and the inner ring raceway surface at a predetermined contact angle; and an outer ring guide cage having pockets that rollably hold the plurality of balls,

wherein the cage includes a pair of annular portions and a plurality of pillar portions arranged at a predetermined interval in a circumferential direction, the plurality of pillar portions coupling the pair of annular portions in an axial direction,

wherein a cage inner diameter is the same over an entire circumference of the pocket at a radially inner opening of the pocket, and

wherein when 1/2 of the cage inner diameter at the radially inner opening is B, a diameter clearance of a radial guide clearance of the cage is ΔL, a pitch circle diameter of the ball is PCD, a diameter of the radially inner opening of the pocket is Dp, A = Bcosθ, and θ=sin⁻¹{(Dp/2)B},

$$B + \Delta L/2 > PCD/2 \text{ and } PCD/2 > A + \Delta L/2$$

are satisfied.

According to this configuration, even when the diameter clearance of the radial guide clearance of the cage is taken into consideration, that is, even when the cage moves in a radial direction by the diameter clearance, a contact position of the ball and the cage in a circumferential direction is an equator portion of the ball and an inner surface of the pocket, and a surface of the ball on a radially outer side of the equator portion can come into contact with the radially inner opening of the pocket in a position in the axial direction. As a result, it is possible to rotationally the cage stably and to reduce cage noise due to self-vibration of the cage. Further, the cage according to the present embodiment can be formed relatively easily.

(2) The angular contact ball bearing according to (1), wherein when Δd is an allowable diameter error of the cage inner diameter,

$$B + \Delta L/2 + \Delta d/2 > PCD/2 \text{ and } PCD/2 > A + \Delta L/2 + \Delta d/2$$

are satisfied.

According to this configuration, even when the diameter clearance of the radial guide clearance of the cage and the allowable diameter error of the cage inner diameter are taken into consideration, that is, even when the cage moves in the radial direction by the diameter clearance and the allowable diameter error of the cage inner diameter, the contact position of the ball and the cage in the circumferential direction is the equator portion of the ball and the inner surface of the pocket, and the surface of the ball on the radially outer side of the equator portion can come into contact with the radially inner opening of the pocket in a position in the axial direction. As a result, it is possible to rotationally the cage stably and to reduce cage noise due to self-vibration of the cage.

(3) The angular contact ball bearing according to (1) or (2), wherein a thick portion is formed on an inner circumferential surface of each of the pair of annular portions, the thick portion protruding from an axially outer end edge of the pocket or an axially outer position from the axially outer end edge toward a radially inner side.

According to this configuration, the radial thickness of the pair of annular portions can be increased and the strength of the cage is improved.

(4)The angular contact ball bearing according to any one of (1) to (3), wherein an inner surface of the pocket is formed in a tapered shape that gradually increases in diameter toward the radially inner side.

According to this configuration, the ball is prevented from coming into edge contact with the radially inner opening of the pocket and the durability of the cage is improved.

Reference Signs List

| 10, 10a to 10h | angular contact ball bearing |
|---|---|
| 11 | outer ring |
| 11a | outer ring raceway surface |
| 12 | inner ring |
| 12a | inner ring raceway surface |
| 13 | ball |
| 14 | cage |
| 15, 16 | annular portion |
| 17 | pillar portion |
| 18 | thick portion |
| 20 | pocket |
| 21 | radially inner opening |
| 22 | axially outer end edge of radially inner opening of pocket |
| 2B | cage inner diameter |
| Dp | diameter of radially inner opening of pocket |
| PCD | pitch circle diameter of ball |
| $\alpha$ | contact angle |
| $\Delta d$ | allowable diameter error of cage inner diameter |
| $\Delta L$ | diameter clearance of radial guide clearance of cage |

**Claims**

1.  An angular contact ball bearing comprising: an outer ring having an outer ring raceway surface on an inner circumferential surface; an inner ring having an inner ring raceway surface on an outer circumferential surface; a plurality of balls rollably arranged between the outer ring raceway surface and the inner ring raceway surface at a predetermined contact angle; and an outer ring guide cage having pockets that rollably hold the plurality of balls,

    wherein the cage includes a pair of annular portions and a plurality of pillar portions arranged at a predetermined interval in a circumferential direction, the plurality of pillar portions coupling the pair of annular portions in an axial direction,
    wherein a cage inner diameter is the same over an entire circumference of the pocket at a radially inner opening of the pocket, and
    **characterized in that**
    when 1/2 of the cage inner diameter at the radially inner opening is B, a diameter clearance of a radial guide clearance of the cage is $\Delta L$, a pitch circle diameter of the ball is PCD, a diameter of the radially inner opening

8

of the pocket is Dp, A = Bcosθ, and θ=sin$^{-1}${(Dp/2)B},

$$B + \Delta L/2 > PCD/2 \text{ and } PCD/2 > A + \Delta L/2$$

are satisfied.

2. The angular contact ball bearing according to claim 1, wherein when Δd is an allowable diameter error of the cage inner diameter,

$$B + \Delta L/2 + \Delta d/2 > PCD/2 \text{ and } PCD/2 > A + \Delta L/2 + \Delta d/2$$

are satisfied.

3. The angular contact ball bearing according to claim 1 or 2, wherein a thick portion is formed on an inner circumferential surface of each of the pair of annular portions, the thick portion protruding from an axially outer end edge of the radially inner opening of the pocket or an axially outer position of the axially outer end edge toward a radially inner side.

4. The angular contact ball bearing according to any one of claims 1 to 3, wherein an inner surface of the pocket is formed in a tapered shape that gradually increases in diameter toward the radially inner side.

**Patentansprüche**

1. Schrägkugellager, das umfasst:

einen Außenring mit einer Außenring-Laufbahnfläche an einer Innenumfangsfläche, einen Innenring mit einer Innenring-Laufbahnfläche an einer Außenumfangsfläche, eine Vielzahl von Kugeln, die zwischen der Außenring-Laufbahnfläche und der Innenring-Laufbahnfläche in einem vorgegebenen Kontaktwinkel so angeordnet sind, dass sie rollen können, sowie einen Außenring-Führungskäfig mit Taschen, die die Vielzahl von Kugeln so halten, dass sie rollen können,
wobei der Käfig ein Paar ringförmiger Abschnitte und eine Vielzahl von Säulenabschnitten enthält, die in einem vorgegebenen Abstand in einer Umfangsrichtung angeordnet sind, und die Vielzahl von Säulenabschnitten die paarigen ringförmigen Abschnitte in einer axialen Richtung koppeln,
der Innendurchmesser des Käfigs über einen gesamten Umfang der Tasche an einer radial innen liegenden Öffnung der Tasche gleich ist, und
**dadurch gekennzeichnet, dass**
wenn 1/2 des Innendurchmessers des Käfigs an der radial innen liegenden Öffnung B ist, ein Durchmesser-Spiel eines radialen Führungsspalts des Käfigs ΔL ist, ein Teilkreisdurchmesser der Kugel PCD ist, ein Durchmesser der radial innen liegenden Öffnung der Tasche Dp ist, A = Bcosθ, und

θ=sin$^{-1}${(Dp/2)/B},

$$B + \Delta L/2 > PCD/2 \text{ sowie } PCD/2 > A + \Delta L/2$$

gelten.

2. Schrägkugellager nach Anspruch 1, wobei, wenn Δd eine zulässige Durchmesser-Abweichung des Innendurchmessers des Käfigs ist,

$$B + \Delta L/2 + \Delta d/2 > PCD/2 \text{ sowie } PCD/2 > A + \Delta L/2 + \Delta d/2$$

gelten.

3. Schrägkugellager nach Anspruch 1 oder 2, wobei ein dicker Abschnitt an einer Innenumfangsfläche jedes der paarigen ringförmigen Abschnitte ausgebildet ist, der dicke Abschnitt von einer axial außen liegenden Endkante der radial innen liegenden Öffnung der Tasche oder einer axial außen liegenden Position der axial außen liegenden Endkante zu einer radial innen liegenden Seite hin vorsteht.

4. Schrägkugellager nach einem der Ansprüche 1 bis 3, wobei eine Innenfläche der Tasche in einer konischen Form ausgebildet ist und ihr Durchmesser zu der radial innen liegenden Seite hin allmählich zunimmt.

**Revendications**

1. Roulement à billes à contact angulaire comprenant :

   une bague extérieure présentant une surface de piste de bague extérieure sur une surface circonférentielle intérieure ; une bague intérieure présentant une surface de piste de bague intérieure sur une surface circonférentielle extérieure ; une pluralité de billes disposées en roulement entre la surface de piste de bague extérieure et la surface de piste de bague intérieure selon un angle de contact prédéterminé ; et une cage guide de bague extérieure présentant des poches qui maintiennent en roulement la pluralité de billes,
   dans lequel la cage inclut une paire de parties annulaires et une pluralité de parties de colonne disposées à un intervalle prédéterminé dans une direction circonférentielle, la pluralité de parties de colonne couplant la paire de parties annulaires dans une direction axiale,
   dans lequel un diamètre intérieur de cage est le même sur une circonférence entière de la poche au niveau d'une ouverture radialement intérieure de la poche, et
   **caractérisé en ce que**
   lorsque 1/2 du diamètre intérieur de cage au niveau de l'ouverture radialement intérieure est B, une garde de diamètre d'une garde de guide radial de la cage est $\Delta L$, un diamètre de cercle primitif de la bille est PCD, un diamètre de l'ouverture radialement intérieure de la poche est Dp, $A = B\cos\theta$, et $\theta = \sin^{-1}\{(Dp/2)/B\}$,

$$B + \Delta L/2 > PCD/2 \text{ et } PCD/2 > A + \Delta L/2$$

   sont satisfaits.

2. Le roulement à billes à contact angulaire selon la revendication 1, dans lequel lorsque $\Delta d$ est une erreur de diamètre tolérable du diamètre intérieur de cage,

$$B + \Delta L/2 + \Delta d/2 > PCD/2 \text{ et } PCD/2 > A + \Delta L/2 + \Delta d/2$$

   sont satisfaits.

3. Le roulement à billes à contact angulaire selon la revendication 1 ou 2, dans lequel une partie épaisse est formée sur une surface circonférentielle intérieure de chacune de la paire de parties annulaires, la partie épaisse débordant d'une arête d'extrémité axialement extérieure de l'ouverture radialement intérieure de la poche ou d'une position axialement extérieure de l'arête d'extrémité axialement extérieure vers un côté radialement intérieur.

4. Le roulement à billes à contact angulaire selon l'une quelconque des revendications 1 à 3, dans lequel une surface intérieure de la poche est formée dans une forme effilée qui augmente graduellement en diamètre vers le côté radialement intérieur.

*FIG.1*

# FIG.2

*FIG.3*

FIG.4

*FIG.5*

## FIG.6A

## FIG. 6B

*FIG.7A*

*FIG. 7B*

FIG.8A

FIG. 8B

FIG.9

## FIG.10A

## FIG. 10B

FIG.11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3255293 A1

- JP 2017057956 A